Europäisches Patentamt

European Patent Office

Office européen des brevets

(19)

(11) **EP 1 407 986 A1**

(12) **EUROPEAN PATENT APPLICATION**

(43) Date of publication:
**14.04.2004 Bulletin 2004/16**

(51) Int Cl.7: **B65G 23/12, B65G 23/44**

(21) Application number: **03077404.6**

(22) Date of filing: **31.07.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **31.07.2002  NL 1021196**

(71) Applicant: **WPS Horti Systems B.V.
3151 ZD Hoek Van Holland (NL)**

(72) Inventor: **Van Zanten, Eef
2672 DN Naaldwijk (NL)**

(74) Representative: **van Westenbrugge, Andries et al
Nederlandsch Octrooibureau
Scheveningseweg 82
P.O. Box 29720
2502 LS Den Haag (NL)**

(54) **Conveyer belt drive/tensioning assembly and conveyor comprising such an assembly**

(57)     The present invention relates to a drive/tensioning assembly (10) for a conveyor, in particular of the endless type. The assembly comprises an assembly frame (11) that is provided with a drive roller (12) that is mounted in bearings on said frame and can be driven around a drive roller axis. The frame furthermore comprises tensioning means. The tensioning means comprise a frame on which two tensioning rollers are mounted in bearings, each tensioning roller being able to rotate around a tensioning roller axis. The tensioning roller frame can be tilted relative to the frame about a tilt axis (13). The drive roller axis, the tensioning roller axes and tilt axis run parallel to one another. The following applies for the distance $a_i$ from the tensioning roller axis of each of the tensioning rollers to the tilt axis: $\sqrt{b^2 +(R+r_i)^2} \leq a_i < R+r_i +b$, where R = radius of drive roller; b = distance from tilt axis to drive roller axis; i = 1 or 2 in the case of the first and the second tensioning roller, respectively; and $r_i$ = radius of first and second tensioning roller, respectively. The drive roller axis is between, on the one hand, the straight line joining the tilt axis and the first tensioning roller axis and, on the other hand, the straight line joining the tilt axis and the second tensioning roller axis. The invention furthermore relates to an endless belt or conveyor system comprising a drive/tensioning assembly according to the invention.

Fig 2

## Description

The invention relates to a drive/tensioning assembly for a conveyor according to the pre-characterising clause of Claim 1.

Such drive/tensioning assemblies are known from the state of the art, on the understanding that usually there is no coupling between the action of, on the one hand, the drive and, on the other hand, the tensioning action of the tensioning means. In the case of endless conveyor systems a drive roller that drives the conveyor via teeth or exclusively frictional contact is frequently used. In this context it is important that when it is driven the conveyor is under sufficient tension to maintain the toothed engagement between drive roller and conveyor or the frictional engagement of the drive roller on the conveyor and also to be able to ensure correct functioning of the endless rotary conveyor that is circulated. The tensioning means that are conventional for this purpose permanently tension the conveyor, which tension is possibly also increased a little as soon as the drive comes into operation. This is usually effected by means of tensioning rollers and return rollers where the tensioning roller is then pushed or pulled into a certain position under spring tension or in some other way, with a force acting perpendicularly to the tensioning roller axis, in order to pull the conveyor tight. Thus, for example, it is known in one line, with the axes located parallel to one another and alongside one another, say, to give some idea, oriented horizontally, the tensioning roller being in the middle and the conveyor being fed between the rollers as it were in the form of a wave. In the case of horizontal orientation of the axes, the tensioning roller can then be moved up and down in the vertical direction in order to tension the conveyor or belt.

However, the known tensioning means have the significant disadvantage that, as a consequence of the conveyor being under tension, in particular permanently under tension, this conveyor is under load, which from the constructional engineering standpoint necessitates the requisite measures for such conveyors. Another disadvantage is that such conveyors must not stretch to any great extent, since otherwise the tensioning means will not be very effective. Conveyor belts are therefore relatively expensive per metre. Furthermore, the fact that the belt is usually continuously under tension has an adverse effect on the life of the endless conveyor or belt under tension.

US-A 3 536 185 discloses a tensioning device consisting of a tensioning frame that can be tilted about a hinge pin, on which tensioning frame tensioning rollers located on either side of a drive roller are mounted. On the other hand the tensioning frame is provided with a lever arm on which a weight is fitted. The device is so constructed that in the absence of a substantial force generated by the driving force of the drive roller one of the tensioning rollers is in contact with the drive roller. If the force on the drive roller is increased this tensioning roller then leaves the drive roller and the other tensioning roller will move further towards the drive roller. Because of the presence of the counterweight, an equilibrium state will be produced depending on the tension on the conveyor. The tensioning roller that moves towards the drive roller never comes into contact with this drive roller when the tension is increased.

The aim of the present invention is now to provide an improved drive/tensioning assembly for a conveyor of, in particular, the endless type, which assembly overcomes, or at least largely overcomes, the abovementioned disadvantages. The aim here is in particular to provide a drive/tensioning assembly that can also be used with conveyors which stretch to a relatively great extent. A further aim is to provide a drive/tensioning assembly with which slip between the conveyor, on the one hand, and the drive roller, on the other hand, is largely prevented.

The abovementioned aims are achieved according to the invention by providing a drive/tensioning assembly for an endless conveyor, comprising an assembly frame provided with a drive roller mounted in bearings on said assembly frame, which drive roller can be driven around a drive roller axis, as well as tensioning means

- wherein the tensioning means comprise a tensioning frame on which two tensioning rollers are mounted in bearings, each of which tensioning rollers is able to rotate around a tensioning roller axis;
- wherein the tensioning frame can be tilted with respect to the assembly frame about a tilt axis;
- wherein the drive roller axis, the tensioning roller axes and the tilt axis run parallel to one another.
- wherein the following applies in respect of the distance a; from the tensioning roller axis of at least one of the tensioning rollers to the tilt axis:

$$\sqrt{b^2 + (R + r_i)^2} \le a_i < R + r_i + b$$

  where:

  R = radius of drive roller
  b = distance from tilt axis to drive roller axis
  i = 1 or 2 in the case of the first and the second tensioning roller, respectively
  $r_i$ = radius of first and second tensioning roller, respectively.

- wherein the drive roller axis is located between, on the one hand, the straight line of length $a_i$ joining the tilt axis and the first tensioning roller axis and, on the other hand, the straight line of length $a_2$ joining the tilt axis and the second tensioning roller axis, wherein the tensioning frame, the tensioning rollers and the drive roller are so positioned that when an appreciable force is applied to the conveyor to be driven by the tensile force on one of the tensioning rollers the other tensioning roller comes into contact with the drive roller with the conveyor in between them.

As will be clear here the terms tensioning roller axis and tilt axis are used to refer to the imaginary axes of rotation rather than specifically the physically visible axles. In any case, in the context of the equation, here the imaginary axes of rotation are intended when reference is made to tensioning roller axis and tilt axis.

What is achieved by providing the tensioning rollers on a tensioning frame that can be tilted about a tilt axis and providing the drive roller axis as it were in the angular region spanned between, on the one hand, the straight line through the tilt axis and the first tensioning roller axis and, on the other hand, the straight line through the tilt axis and the second tensioning roller axis is that when the drive roller is driven round the conveyor or belt moved by this means pulls the one tensioning roller downwards and pushes the other tensioning roller upwards until it is in contact with the drive roller. Because the distance from the axis of the tensioning roller pushed upwards to the tilt axis is chosen to be smaller than the radius of the drive roller plus the radius of the tensioning roller concerned plus the distance from the drive roller to the tilt axis it is ensured that said tensioning roller pushed upwards is always pressed against the drive roller and is not able to shoot past it. In this way it is ensured that the conveyor is always pressed between the tensioning roller concerned and the drive roller and that a firm, friction-free contact can be achieved in this position. A further factor that plays a role here is that as the tensile resistance to which the conveyor belt is subjected when it is fed round becomes greater the tensioning roller pressed downwards will be pressed more firmly downwards and the tensioning roller pushed upwards will be pushed more firmly against the drive roller. The lower limit for the value a; ensures that there is an adequate contact length of the conveyor or belt over the drive roller. If the lower limiting value for a; applies for both tensioning roller axes, it is then ensured by this means that the conveyor is able to be in contact over at least about half of the drive roller.

According to an advantageous embodiment of the invention, the device is so constructed that it operates in two directions. That is to say the drive roller is able to rotate in two directions in order to move the conveyor in two directions and depending on the direction of movement one of the rollers will be pressed against the drive roller in order to produce the desired driving force. Each of the distances from the tensioning rollers to the tilt axis will comply with the above equation.

According to a particularly preferred embodiment of the drive/tensioning assembly according to the invention, $r_1 = r_l$ and $a_1 = a_2$. In this way a completely symmetrical drive/tensioning assembly is obtained, which has the major advantage that this drive/tensioning assembly functions in both directions of rotation for the drive roller and specifically functions in the same way in both drive directions.

So that the angle through which the tensioning roller to be pressed against the drive roller, hereinafter referred to as the downstream tensioning roller, tilts is relatively small and thus the space required for the installation of the drive/tensioning assembly can be kept relatively small, it is advantageous according to the invention if for the distance $c \leq 2R + r_1 + r_2$. So that with this arrangement the angle of the arc over which the belt or conveyor comes into contact with the drive roller is also relatively large, it is advantageous if the said distance c is less than or equal to $2R + \frac{1}{2}(r_1 + r_2)$. If $c \leq 2R$ this angle for the arc of contact then becomes very large and comes in the region of the maximum angle for the arc.

According to an advantageous embodiment the conveyor is wrapped around the drive roller over an angle of at least 180° and more particularly at least 270°. Maximum engagement can be achieved by this means.

According to the invention a virtually maximum angle for the arc of contact of the conveyor with the drive roller, on the one hand, and, on the other hand, also a sufficiently effective lever moment for adequate pressing of the conveyor or belt on the drive roller by the tensioning roller can be achieved if the line joining the tensioning roller axes touches the drive roller. In the case of a drive roller that can be driven in two directions, this will be in particular in the case where the distance from each tensioning roller axis to the drive axis is the same.

According to a further advantageous embodiment, the drive roller can be driven in the two opposing directions by means of a drive actively connected to the drive roller.

According to a further aspect the present invention relates to an endless conveyor system comprising a drive/tensioning assembly according to the invention. In such a system the drive/tensioning assembly is in particular provided in the lower part of the endless conveyor, so that the upper part can be used to transport articles that are on said upper part.

According to a very particularly preferred embodiment, with the system according to the invention the upper part of the conveyor belt runs through a U-shaped body, such as a channel. The conveyor belt itself is then supported only by the U-shaped body. Such embodiments are in particular possible with the drive/tensioning assembly according to the invention because the conveyor, which here is referred to as conveyor belt because of its function, is tensioned only when operated for transport and for the rest of the time can simply hang loose and thus does not have to be under tension or have to be supported in the interim by rollers and wheels.

The present invention will be explained in more detail with reference to the diagrammatic figures to be discussed below. In the figures:

Figure 1 shows, highly diagrammatically, partly in section, a system according to the invention with a drive/tensioning assembly according to the invention; where Figure 1a shows the drive/tensioning assembly in a driving position and Figure 1b shows, as a detail, only the drive/tensioning assembly according to the invention in the rest position;

Figure 2 shows, highly diagrammatically, a variant of a drive/tensioning assembly according to the invention;

Figure 3 shows a diagrammatic, graphical representation of the lower limit for the distance from at least one of the tensioning rollers to the tilt axis; and

Figure 4 shows a corresponding figure to Figure 3, but now showing an upper limit for the distance from at least one of the tensioning roller axes to the tilt axis.

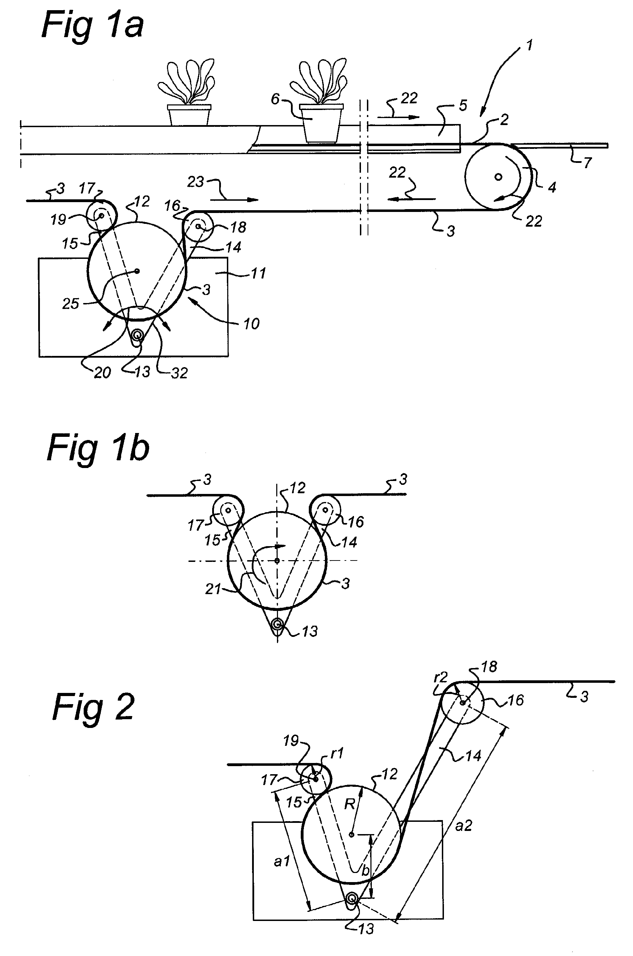

Figure 1 shows, highly diagrammatically, a system 1 according to the invention provided with an assembly 10 according to the invention. The system 1 according to the invention consists of an endless conveyor, used as conveyor belt, with an upper part 2 and a lower part 3. At the far end shown the upper part 2 is guided via a return roller 4 to the lower part 3. The upper part 2 runs through a channel 5, shown partially in section. The channel 5 is not essential per se but is practical for guiding purposes. In the illustrative embodiment shown there are root containers, such as pots 6 containing plants, on the upper part 2. As will also be clear, the conveyor belt 2, 3 can be driven both in the clockwise and the anticlockwise direction. A feed/discharge surface 7 is shown diagrammatically at the right-hand end shown. This feed/discharge surface 7 can as such be a further conveyor belt running transversely to the conveyor belt 2, 3 or some other discharge or feed system.

The endless conveyor system 1 is provided with a drive/tensioning assembly 10 according to the invention for driving and also tensioning the conveyor. This drive/tensioning assembly 10 comprises an assembly frame 11 (that here is indicated diagrammatically by means of a member in the form of a plate) on which a drive roller 12 is mounted in bearings such that it can rotate. On the front of the assembly frame 11 there is also a tensioning frame 32 mounted in bearings such that it is able to tilt about tilt axis 13. In the example shown the tensioning frame 32 is of V-shaped construction, but this shape can also be different. The arms of the V can also be bent or curved in some other way and it is also conceivable to construct the tensioning frame 32 in a Y-shape. The tensioning frame 32 shown here comprises a first arm 15 and a second arm 14. The first arm 15 supports a first tensioning roller 17 that is mounted in bearings on the first arm 15 such that it is able to rotate about a first tensioning roller axis 19. The second arm 14 supports a second tensioning roller 16 mounted in bearings such that it is able to rotate about a second tensioning roller axis 18. As is indicated by double-headed arrow 20, the tensioning frame 32 can be tilted about the tilt axis 13 in two directions.

Going from right to left in the drawing, the conveyor belt, in this case the lower part 3, is fed over the second tensioning roller 16, bent downwards between tensioning roller 16 and drive roller 12, fed underneath the drive roller 12 and then fed between tensioning roller 17 and drive roller 12 and over the first tensioning roller 17 again into a horizontal direction.

If, starting from the rest position as shown in Fig. 1b, the drive roller 12 is now driven clockwise in the direction according to arrow 21, this roller will want to pull the lower part 3 along in the clockwise direction, as indicated by arrows 22. The second tensioning roller 16 will then be subjected to a force, directed towards the right in Fig. 1a, that will want to force the second tensioning roller 16 to make a tilting movement in the clockwise direction about the tilt axis 13. The second tensioning roller 16 will thus lower into the position shown in Fig. 1a until the first tensioning roller 17, in a position that is higher compared with Fig. 1b, comes into contact with the drive roller 12 so as to clamp the conveyor belt running between the first tensioning roller 17 and the drive roller 12 firmly between the two. This clamping, or possibly to put it more accurately, exertion of pressure on the drive roller 12 will be the stronger the greater the opposing tensile force oriented in the direction of arrow 23 that is experienced by the second tensioning roller 16, thus the greater the weight of, inter alia, the load on the upper part 2 of the conveyor belt becomes. As soon as the drive for the drive roller 12 is stopped, the tensioning frame 32 will, when the conveyor belt 2, 3 also allows adequate relief in the load, be able to move back again into the rest position as shown in Fig. 1b. If desired, this movement back into the rest position can be supported by the action of springs or something similar.

It will be clear that if, instead of being driven in the clockwise direction, the drive roller 12 is driven anticlockwise, the tensioning frame 32 will tend to want to tilt anticlockwise, in which case the second tensioning roller 16 is made to press against the drive roller 12 and the first tensioning roller 17 will create the pressure moment required for this. This is precisely the reverse of what has been described with reference to Fig. 1a. It will furthermore be clear that in connection with the ability to drive drive roller 12 in two directions it is advantageous to construct the tensioning frame 12 with the tensioning rollers symmetrically.

However, it will also be clear that it is not absolutely essential to construct the tensioning frame symmetrically. This is illustrated in Fig. 2, showing, as a detail, a variant of the drive/tensioning assembly from Fig. 1a, at least in the same state as in Fig. 1a. The difference between Fig. 2 and Fig. 1 is that in the case of the embodiment according to Fig. 2 the second arm 14 has been extended, compared with the first arm 15 and also that the radius $r_2$ of the second tensioning roller 16 is not the same as the radius $r_1$ of the first tensioning roller 17. The second arm 14 has a length $a_2$ and the first arm 15 a length $a_1$, the dimensions $a_1$ and $a_2$ always being related to the centre-to-centre distance between, in each case, the respective tensioning roller axis 18, 19 on the one hand and the tilt roller axis 13 on the other hand. It will also be clear that the advantage of this construction is that if the drive roller 12 is driven clockwise the second tensioning roller 16, because of the longer arm 14, provides a higher contact pressure by means of which the first tensioning roller 17 is pressed onto the drive roller 12. It will also be clear that although the assembly shown in Fig. 2 also allows driving in the opposing direction, that is to say anticlockwise driving of the drive roller 12, the operation will then be significantly less optimum because it will not be possible to press the second tensioning roller 16 against the drive roller 12. This does not have to constitute a problem for possible resetting of the conveyor belt for, for example, maintenance.

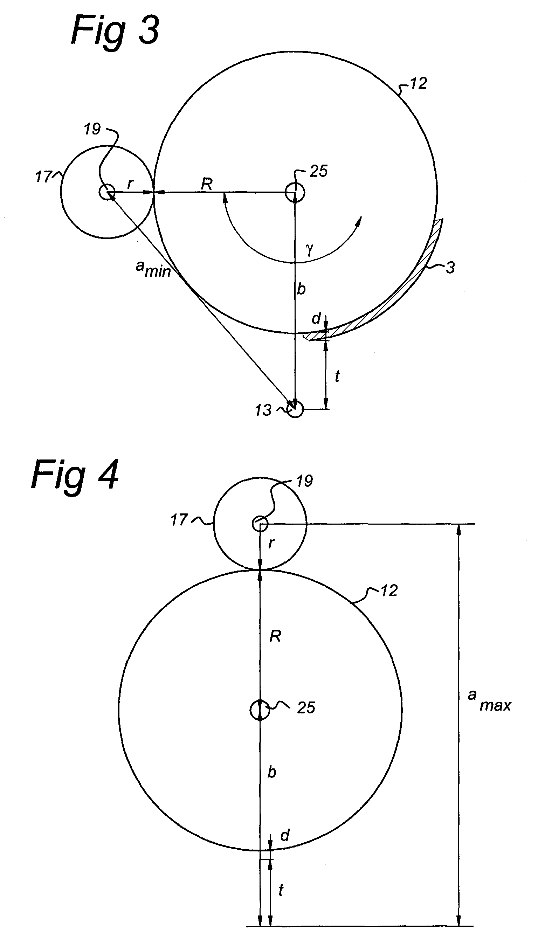

In Figs. 3 and 4 the lower limit and upper limit for the centre-to-centre distance between at least one tensioning roller axis and the tilt axis are illustrated in more detail.

The drive roller 12 and the first tensioning roller 17 are shown in both figures. 19 is the tensioning roller axis/centre line of tensioning roller 17, 25 is the drive roller axis/centre line of drive roller 12 and 13 is the tilt axis/centre line. The drive roller 12 has a radius R and the tensioning roller 17 has a radius r. The centre-to-centre distance between the tilt axis 13 and the drive roller axis 25 is b. The thickness of the conveyor belt is indicated by d and the residual clearance between the conveyor belt d and the tilt axis 13 is t. In connection with being able to feed through a section of conveyor belt between the tilt axis 13 and the drive roller 12, it is preferable according to the invention if the distance t is approximately 10 mm or possibly more. However, it is pointed out that the value t can also assume negative values, or to put it another way the value b can be less than R.

The following applies in respect of the minimum distance between the tensioning roller axis 19 and the tilt axis 13:

$$a_i = \sqrt{b^2 + (R + r_i)^2} \, .$$

This minimum distance applies in any event for one of the two tensioning rollers but preferably will apply for both tensioning rollers. Specifically, if this minimum distance applies for both tensioning rollers it is also ensured that $\gamma$ - called the contact angle - over which the conveyor belt 3 is in contact or at least can be in contact with the drive roller 12 will be at least approximately 180°.

For the second extreme position it is important to realise that for the conveyor belt to be pressed firmly onto the drive roller 12 it must be ensured that, when it tilts about the tilt axis 13, the tensioning roller 17 is not able to pass over the tensioning roller 12 without touching this.

It is pointed out that in the equation used in Claim 1, which has been explained with reference to Figures 3 and 4, strictly speaking the thickness d of the conveyor belt should also be included. However, in practice this thickness d is negligible because, on the one hand, this thickness d is relatively small or at least will be so in practice compared with the dimensions b and R and, on the other hand, because the conveyor belt, viewed in practical terms, will also be compressed to some extent so that the value d will not be a precise value. However, if it is desired to take the value d into account then in each case R will have to be replaced by R + d in the equations.

It is pointed out that where reference is made to a roller in the application, including in the case of tensioning roller and drive roller, this can also be a wheel or disc completely within the scope of the present application.

It is also pointed out that where reference is made to a conveyor in this application this term equally well denotes a belt, cord, girdle, rope, cable, etc. This also applies where conveyor and belt may be mentioned next to one another. In the general sense, conveyor, etc. is designated as an elongated flexible member that may be or may not be in the form of an endless loop.

It is also pointed out that here the drive/tensioning assembly has been shown merely as an illustrative embodiment in connection with a transport system for plants, which, incidentally, can also be a cultivation installation for plants such as is known from EP 668 012. EP 668 012 describes the use of a channel with a conveyor belt running through it for the cultivation of plants in said channel, where the conveyor belt can then be used to remove the plants from the channel when they have grown sufficiently and also to set down the plants, in particular the plant pots, in the channel in order to allow them to grow sufficiently there.

The drive/tensioning assembly can in particular be used with drive wheels that bring the conveyor belt into motion by means of frictional forces. The drive wheel will then advantageously be able to be provided with a rib pattern that improves grip. However, the drive/tensioning assembly according to the invention can also be used with combinations of toothed drive wheel and toothed conveyor or belt.

**Claims**

1. Drive/tensioning assembly for a conveyor, in particular of the endless type, comprising an assembly frame provided with a drive roller mounted in bearings on said assembly frame, which drive roller can be driven around a drive roller axis, as well as tensioning means

- wherein the tensioning means comprise a tensioning frame on which two tensioning rollers are mounted in bearings, each of which tensioning rollers is able to rotate around a tensioning roller axis;
- wherein the tensioning frame can be tilted with respect to the assembly frame about a tilt axis;
- wherein the drive roller axis, the tensioning roller axes and the tilt axis run parallel to one another.
- wherein the following applies in respect of the distance a; from the tensioning roller axis of at least one of the tensioning rollers to the tilt axis:

$$\sqrt{b^2 + (R + r_i)^2} \le a_i < R + r_i + b$$

where:

R = radius of drive roller
b = distance from tilt axis to drive roller axis
i = 1 or 2 in the case of the first and the second tensioning roller, respectively
$r_i$ = radius of first and second tensioning roller, respectively,

- wherein the drive roller axis is located between, on the one hand, the straight line of length $a_i$ joining the tilt axis and the first tensioning roller axis and, on the other hand, the straight line of length $a_2$ joining the tilt axis and the second tensioning roller axis, **characterised in that** the tensioning frame, the tensioning rollers and the drive roller are so positioned that when an appreciable force is applied to the conveyor to be driven by the tensile force on one of the tensioning rollers the other tensioning roller comes into contact with the drive roller with the conveyor in between them.

2. Drive/tensioning assembly according to Claim 1, wherein $r_1 = r_2$ and $a_1 = a_2$.

3. Drive/tensioning assembly according to one of the preceding claims, wherein the following applies for the distance c between the tensioning roller axes:
   $c \le 2R + r_1 + r_2$
   and in particular: $c \le 2R + \frac{1}{2}(r_1 + r_2)$
   and preferably: $c \le 2R$

4. Drive/tensioning assembly according to one of the preceding claims, wherein the line joining the tensioning roller axes, in the rest position, touches the drive roller, in particular in the case where the distance from each tensioning roller axis to the drive axis is the same.

5. Drive/tensioning assembly, wherein the drive roller can be driven in the two opposing directions by means of a drive actively connected to the drive roller.

6. Drive/tensioning assembly according to one of the preceding claims, wherein the following applies in respect of the distance $a_1$ from the tensioning roller axis of both tensioning rollers to the tilt axis:

$$\sqrt{b^2 + (R + r_i)^2} \le a_i < R + r_i + b$$

where:

R = radius of drive roller
b = distance from tilt axis to drive roller axis
i = 1 or 2 in the case of the first and the second tensioning roller, respectively
$r_i$ = radius of first and second tensioning roller, respectively.

7. Drive/tensioning assembly according to one of the preceding claims, wherein the tensioning frame, the tensioning rollers and the drive roller are so positioned that the conveyor to be driven is wrapped around the driver roller over at least 180°.

8. Drive/tensioning assembly according to Claim 7, wherein the conveyor to be driven is wrapped around the drive roller over at least 270°.

9. Endless conveyor system comprising a drive/tensioning assembly according to one of Claims 1 - 8.

10. System according to Claim 9, wherein the drive/tensioning assembly is provided in the lower part of the endless belt or conveyor.

11. System according to Claim 9 or Claim 10, comprising a conveyor belt where the upper part runs through a U-shaped part, such as a channel.

## Fig 1a

## Fig 1b

## Fig 2

# Fig 3

# Fig 4

## European Patent Office

**EUROPEAN SEARCH REPORT**

Application Number

EP 03 07 7404

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | US 3 536 185 A (BECK JACOB HOWARD) 27 October 1970 (1970-10-27) * the whole document * | 1,3,5,6, 8-10 | B65G23/12 B65G23/44 |
| A | DE 196 35 665 A (SANKI ENG CO LTD) 5 March 1998 (1998-03-05) * page 8, line 32 - line 44; figure 1C * * page 4, line 66 - page 5, line 40; figures 2,8 * | 1,3,5,6, 8-10 | |
| A | FR 2 771 080 A (SOGEM AGRO) 21 May 1999 (1999-05-21) * figure 5 * | 1,5,8-10 | |

TECHNICAL FIELDS SEARCHED (Int.Cl.7)

B65G

The present search report has been drawn up for all claims

| Place of search | Date of completion of the search | Examiner |
|---|---|---|
| THE HAGUE | 23 January 2004 | Beernaert, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 07 7404

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2004

| Patent document cited in search report | | Publication date | Patent family member(s) | | Publication date |
|---|---|---|---|---|---|
| US 3536185 | A | 27-10-1970 | NONE | | |
| DE 19635665 | A | 05-03-1998 | DE | 19635665 A1 | 05-03-1998 |
| FR 2771080 | A | 21-05-1999 | FR | 2771080 A1 | 21-05-1999 |

EPO FORM P0459

For more details about this annex : see Official Journal of the European Patent Office, No. 12/82